# EUROPÄISCHE PATENTANMELDUNG

(11) **EP 2 193 985 A1**
(43) Veröffentlichungstag der Anmeldung: **09.06.2010**
(21) Anmeldenummer: 09176058.7
(22) Anmeldetag: 16.11.2009
(51) Int. Cl.: B62D 53/08, B61D 45/00

(54) **Sattelauflieger-Ladestütze mit Hubsperre**

(30) Priorität: 05.12.2008 DE 102008060734
(71) Anmelder: British American Tobacco (Germany) GmbH, 20354 Hamburg (DE)
(72) Erfinder: Schäfer, Thomas, 95466, Weidenberg (DE)
(74) Vertreter: Schwabe - Sandmair - Marx

(57) **Zusammenfassung**

Die Erfindung betrifft eine Ladestütze (1) für einen Sattelauflieger, mit einem Rahmengestell (2) und einer Königszapfenverbindung (3) und mit einer die Bodenhaftung des Gestells (2) herstellenden oder unterstützenden Hubsperre (7, 17).

## Beschreibung

Die Erfindung betrifft eine Ladestütze für einen Sattelauflieger mit einem Rahmengestell und einer Königszapfenverbindung.

Bei der Nutzung von Sattelaufliegern im Straßenverkehr werden diese mit ihrem Vorderteil auf den Sattel der Zugmaschine befestigt und durch einen so genannten Königszapfen oder -bolzen zentriert. Wird der Sattelauflieger ohne Zugmaschine abgestellt, wird er abgesattelt. Dabei wird er auf eigene Abstellstützen gesetzt, die hinter dem Zugsattelzapfen außerhalb des Zugmaschinenbereiches unter dem Sattelauflieger angeordnet sind. Diese Abstellstützen sind zum sicheren Abstellen auf Straßen und Plätzen ausreichend.

Weil immer mehr Sattelauflieger in Leichtbauweise gebaut werden, kommt es beim Be- oder Entladen von frei stehenden, d. h. auf dem Fahrzeug eigenen Abstellstützen stehenden Sattelaufliegern mittels Gabelstaplern an Laderampen ohne Sicherung verstärkt zu einem Hochwippen der Sattelauflieger vorne. Dieses Hochwippen stellt eine Gefahr für das Verladepersonal dar. Ladegut, Gabelstapler und Sattelauflieger könnten beschädigt werden. Der Auflieger muss also zusätzlich gegen mögliches Kippen nach vorne gesichert werden.

Die Sattelauflieger hinten, von unten an den Längsträgern, abzustützen, ist nur beschränkt oder nicht möglich, da die Fahrzeugkonstruktionen bei jedem Hersteller unterschiedlich und die Träger schwer oder nicht zugänglich sind.

Eine Stützvorrichtung die den Königszapfen bzw. -bolzen verwendet und ungewollte oder unkontrollierte Bewegungen des Sattelaufliegers verhindern soll, ist beispielsweise aus der DE 28 21 697 A1 bekannt. Dabei handelt es sich um die Sicherung von Aufliegern für im Huckepackverfahren zu transportierende Sattelauflieger im Bahnverkehr. Eine Zugmaschine fährt mit ihrer Sattelplatte unter einen Stützbock und rastet die Sattelkupplung selbsttätig in den Zugsattelzapfen des Stützbocks ein. Die Zugmaschine fährt dann unter den Sattelauflieger und sattelt diesen ebenfalls auf. Der Sattelauflieger mit dem Stützbock wird auf den Huckepackwagen verladen. Dort wird der Stützbock arretiert.

In der WO 2005/063601 A1 ist ein Sicherungssystem beschrieben, welches an einer Laderampe angebracht ist und ein Absinken des Sattelaufliegers beim Einfahren eines Gabelstaplers verhindern soll.

Es ist die Aufgabe der vorliegenden Erfindung, ein gut handhabbares und zuverlässiges System bereitzustellen, welches das Hochkippen des Sattelaufliegers beim Be- und Entladen mittels eines Gabelstaplers an einer Laderampe verhindert.

Diese Aufgabe wird durch eine Ladestütze gemäß dem Anspruch 1 gelöst. Die Unteransprüche definieren bevorzugte Ausführungsformen der Erfindung.

Erfindungsgemäß wird eine Ladestütze für einen Sattelauflieger, die ein Rahmengestell und eine Königszapfenverbindung aufweist, dadurch weitergebildet, dass sie mit einer die Bodenhaftung des Gestells herstellenden oder unterstützenden Hubsperre versehen wird. Mit anderen Worten dient die erfindungsgemäße Ladestütze nicht nur als eine Stütze im Sinne einer Auflage, die von oben belastet wird, sondern sie dient auch als eine Halterung, welche Bewegungen des gestützten Teils verhindert, die nach oben gerichtet sind und eine Kippbewegung des Aufliegers verursachen würden. In diesem Sinne kann die erfindungsgemäße Ladestütze auch mit Hilfe von Begriffen wie "Bodenhalterung", "Bodenverankerung" oder "Bodenhaftungs-Anordnung" definiert werden. Sie hält nämlich den Auflieger am Boden fest und verhindert eine Hubbewegung in seinem vorderen Bereich, also im Bereich der Königszapfenverbindung. Vorteilhafterweise kann mit einer derartigen, erfindungsgemäßen Ausgestaltung, die auch als System begreifbar ist, ein Abkippen des Aufliegers auch dann verhindert werden, wenn er an seiner Rückseite im Bereich der Ladeklappe stark belastet wird, beispielsweise durch das Auffahren eines Gabelstaplers.

Bei einer erfindungsgemäßen Ausführungsform umfasst die Hubsperre ein Gegengewicht, das in dem Rahmengestell eingesetzt oder an ihm angebracht ist. Wichtig ist hierbei, dass das Gegengewicht so mit dem Rahmengestell verbunden ist, dass es ein Anheben des Gestells aufgrund seines Eigengewichtes vermeidet. Der Vorteil der Ausgestaltung mit einem Gegengewicht liegt darin, dass die so konstruierte Ladestütze unabhängig von äußeren Zusatzeinrichtungen funktionieren kann.

Bei einer anderen oder zusätzlich umsetzbaren Ausführungsform umfasst die Hubsperre eine form- oder kraftschlüssige, insbesondere mechanische Bodenverbindungsvorrichtung. Letztere kann als Schraub- oder Steckverbindungsvorrichtung ausgestaltet werden und den Verbindungsschluss mit Boden in dieser Weise mechanisch herbeiführen. Es ist dabei denkbar, einseitig an der Ladestütze angeordnete Bodenverbindungsmittel vorzusehen (beispielsweise selbst in den Boden einschneidende Stifte bzw. Schrauben oder klebende bzw. klettende Verbindungsvorrichtungen), andererseits kann die Verbindungsvorrichtung an der Ladestütze mit einem Gegenstück im Boden oder auf dem Boden, auch mit einem Gegenstück an einem solchen Gewicht, in Eingriff treten. Wenn die Ladestütze also beispielsweise einen Haken umfasst, können im Bereich einer Laderampe auf dem Boden an verschiedenen Stellen oder verschieblich ösenartige Gegenstücke vorgesehen werden, in welches die Hakenvorrichtung der Ladestütze dann einrasten kann. Dies ist nur ein Beispiel, auch magnetische Lösungen mit beispielsweise starken Elektromagneten könnten angedacht werden.

Einer erfindungsgemäßen Ausführungsvariante der Ladestütze sind am Unterteil des Gestells Räder oder Rollen für die Verschiebung bzw. Platzierung der Ladestütze angeordnet. Speziell können diese Räder oder Rollen so vorgesehen werden, dass sie aus ihrer Rollposition entfernt werden, insbesondere versenkt werden können. Dadurch lässt sich die Ladestütze gut manuell handhaben und ohne großen Aufwand an ihren Einsatzort verbringen.

In ihrem oberen Bereich kann die Ladestütze eine Sattelkupplung bzw. eine Königszapfenkupplung (als Ausführungsform einer Königszapfenverbindung) aufweisen. Hier ist festzustellen, dass die Königszapfenverbindung für Lastauflieger zwar die gebräuchlichste Verbindung ist, die vorliegende Erfindung jedoch bei allen Arten von Lastanhängern mit allen möglichen Verbindungen zum Zugfahrzeug umsetzbar ist. Dazu muss immer lediglich die Kupplung an der Ladestütze entsprechend angepasst werden.

Mit Vorteil ist diese Kupplung (Sattelkupplung, Königszapfenkupplung) gegenüber dem Gestell in der Höhe verstellbar angeordnet, was eine einfache Handhabung beim Einkuppeln und beim Auskuppeln ermöglicht, weil der Auflieger durch das Beladen und Entladen in vielen Fällen seine Höhe ändern wird.

Die Kupplung kann auf einer teleskopartig aus- und einfahrbahren Kupplungsstütze angeordnet sein und außerdem oder zusätzlich, oder auch ausschließlich an einem Hydraulikzylinder angeordnet sein oder von diesem getragen werden. Dabei ist es dann möglich und insbesondere auch von Vorteil, wenn der Ladestütze eine Öffnung- und Verschluss-Stelleinrichtung für die Hydraulikversorgung des Zylinders zugeordnet ist, die insbesondere am Gestell angeordnet sein kann, so dass sie leicht erreichbar und gut bedienbar ist. Mittels dieser Stelleinrichtung kann dann die Höhenverstellbarkeit des Zylinders freigegeben oder gesperrt werden, so dass das Ein- und Auskuppeln kraftfrei und in der richtigen Höhe stattfinden kann.

Es ist ferner möglich, die Ladestütze noch mit einem Angriff bzw. Eingriff für einen Gabelstapler zu versehen, der insbesondere am Gegengewicht angeordnet sein kann, wenn ein solches vorhanden ist. Natürlich ist am sinnvollsten den Eingriff als einen Eingriff für die Gabeln des Staplers auszugestalten, jedoch sind auch andere Eingriffsmöglichkeiten für alle denkbaren Hub- oder Fahrhilfsgeräte im Rahmen der Erfindung denkbar.

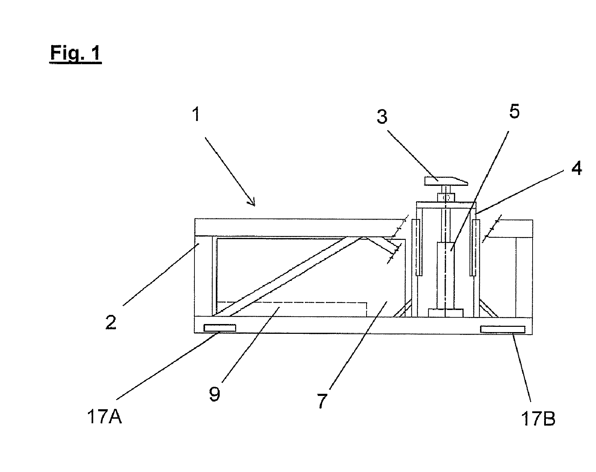

Die Erfindung wird im Weiteren anhand von Ausführungsformen und unter Bezugnahme auf die beiliegende Zeichnung näher erläutert. Sie kann alle hierin beschriebenen Merkmale einzeln sowie in jedweder sinnvollen Kombination umfassen. Die beiliegende, einzige Figur 1 zeigt eine Ladestütze gemäß der Erfindung in einer schematischen Darstellung.

Die erfindungsgemäße Sicherung eines Sattelaufliegers, der sich an einer Laderampe befindet, von der Zugmaschine abgesattelt ist und auf den eigenen Abstellstützen steht, erfolgt bei einer Ausführungsform einer Ladestütze 1 durch ein Gestell 2 zur Stützung des Sattelaufliegers, das zusätzlich mit einem Gegengewicht 7 versehen ist, um das Hochwippen zu unterbinden. Dieses Gestell 2 muss aufgrund des Gewichtes mittels Gabelstapler platziert werden. Dabei nimmt der Gabelstapler die Stütze mit den Gabeln im Bereich einer Aussparung 9 im Gegengewicht 7 auf. Durch das Gegengewicht 7 wird der Sattelauflieger zusätzlich noch gegen Wegrollen gesichert.

Bei einer alternativen Ausführungsform kann auf das Gewicht verzichtet werden und das Gestell 2 könnte entweder mittels Hubwagen oder am Gestell befestigten, versenkbaren Rädern auch von Hand platziert werden. In diesem Fall ist aber eine Befestigung des Gestells mit am Boden angebrachten Halterungen von Vorteil, die in der Figur 1 schematisch dargestellt sind und die Bezugszeichen 17 A und 17 B tragen. Es kann sich z. B. um Haken oder Schraubverbindungsteile handeln, die in Gegenstücke am Boden eingreifen oder mit Schnellverbindungen am Boden arretiert werden können.

Ganz grundsätzlich kann auch eine Kombination von Gegengewicht- und Bodenverbindungsvorrichtung erfindungsgemäß umgesetzt werden. Wenn das Gestell selbst schwer genug ausgestaltet wird, kann auch sein Eigengewicht die Hubsperre bilden.

Im gezeigten Gestell 2 befindet sich an der Teleskopstütze 4 ein Hydraulikzylinder 5 auf dem eine Original-LKW-Sattelkupplung 3 montiert ist. Mit der Sattelkupplung 3 wird eine formschlüssige Verbindung zwischen Gestell 2 und Sattelauflieger hergestellt. Durch die Sattelkupplung 3 und die Ladestütze 1 wird der Sattelauflieger gegen ein Abkippen nach vorne abgestützt. Zusätzlich verhindert die formschlüssige Verbindung mit dem Königsbolzen ein Hochwippen des Sattelaufliegers.

Der Hydraulikzylinder 5 dient dazu, die bauartbedingten Höhenunterschiede der Sattelauflieger beim Unterstellen auszugleichen. Da sich die Sattelauflieger, wenn sie fertig beladen sind, je nach Bauart und Gewicht der Ladung mehr oder weniger nach unten durchbiegen, hilft das Hydraulikzylinder-Lagerungssystem für die Kupplung 3 auch dabei, die Ladestütze 1 wieder leicht vom Auflieger bzw. dessen Königsbolzen entfernen zu können.

Das Gestell 2 mit der Sattelkupplung 3 wird unter den Sattelauflieger geschoben bis die Sattelkupplung 3 am Königsbolzen einrastet. Beim Abstellen wird die Kolbenstange des Zylinders 5 bedingt durch das Eigengewicht der Ladestütze 1 herausgezogen. Nachdem das Gestell 2 auf dem Boden steht, werden der Verschluss der Sattelplatte und der Ölkreislauf des Hydraulikzylinders 5 geschlossen. Somit ist der Zylinder 5 in seiner Stellung fixiert und der Sattelauflieger gesichert.

Nach dem Beladen werden der Verschluss der Sattelplatte und der Ölkreislauf geöffnet und die Ladestütze 1 mittels Gabelstapler angehoben und herausgezogen. Die Ladestütze 1 ist damit sofort wieder einsatzbereit.

Diese Konstruktion simuliert eine unter dem Sattelauflieger stehende Zugmaschine, d.h. die Beladung kann genau so durchgeführt werden wie mit angehängter Zugmaschine.

## Patentansprüche

1. Ladestütze (1) für einen Sattelauflieger, mit einem Rahmengestell (2) und einer Königszapfenverbindung (3), **gekennzeichnet durch** eine die Bodenhaftung des Gestells (2) herstellende oder unterstützende Hubsperre (7, 17).

2. Ladestütze nach Anspruch 1, **dadurch gekennzeichnet, dass** die Hubsperre ein Gegengewicht (7) umfasst, das in das Rahmengestell eingesetzt oder an ihm angebracht ist.

3. Ladestütze nach Anspruch 1 oder 2, **dadurch gekennzeichnet, dass** die Hubsperre eine form- oder kraftschlüssige, insbesondere mechanische Bodenverbindungsvorrichtung (17A, B) umfasst.

4. Ladestütze nach Anspruch 3, **dadurch gekennzeichnet, dass** die Bodenverbindungsvorrichtung eine Schraub- oder Steckverbindungsvorrichtung ist.

5. Ladestütze nach einem der Ansprüche 1 bis 4, **dadurch gekennzeichnet, dass** am Unterteil des Gestells (2) Räder oder Rollen für die Verschiebung bzw. Platzierung der Ladestütze (1) angeordnet sind, insbesondere aus der Rollposition entfernbare, speziell versenkbare Räder oder Rollen.

6. Ladestütze nach einem der Ansprüche 1 bis 5, **dadurch gekennzeichnet, dass** sie im oberen Bereich eine Sattelkupplung bzw. eine Königszapfenkupplung (3) aufweist, die gegenüber dem Gestell (2) in der Höhe verstellbar angeordnet ist.

7. Ladestütze nach Anspruch 6, **dadurch gekennzeichnet, dass** die Kupplung (3) auf einer teleskopartig aus- und einfahrbaren Kupplungsstütze (4) angeordnet ist.

8. Ladestütze nach Anspruch 6 oder 7, **dadurch gekennzeichnet, dass** die Kupplung an einem Hydraulikzylinder (5) angeordnet ist.

9. Ladestütze nach Anspruch 8, **dadurch gekennzeichnet, dass** ihr eine Öffnungs- und Verschluss-Stelleinrichtung für die Hydraulikversorgung des Zylinders (5) zugeordnet ist, insbesondere am Gestell (2) angeordnet ist, mittels welcher die Höhenverstellbarkeit des Zylinders (5) freigegeben oder gesperrt werden kann.

10. Ladestütze nach einem der Ansprüche 1 bis 9, **dadurch gekennzeichnet, dass** sie einen Angriff bzw. Eingriff (9) für einen Gabelstapler aufweist, der insbesondere im oder am Gegengewicht (7) angeordnet ist.
